(19) Europäisches Patentamt
European Patent Office
Office européen des brevets

(11) Veröffentlichungsnummer: **0 491 232 A1**

(12) # EUROPÄISCHE PATENTANMELDUNG

(21) Anmeldenummer: **91120796.7**

(51) Int. Cl.5: **C08G 65/26**, C08G 18/48

(22) Anmeldetag: **04.12.91**

(30) Priorität: **18.12.90 DE 4040466**

(43) Veröffentlichungstag der Anmeldung:
**24.06.92 Patentblatt 92/26**

(84) Benannte Vertragsstaaten:
**BE DE ES FR GB IT**

(71) Anmelder: **BASF Aktiengesellschaft**
**Carl-Bosch-Strasse 38**
**W-6700 Ludwigshafen(DE)**

(72) Erfinder: **Hinz, Werner, Dr.**
**Hanns-Fay-Strasse 1**
**W-6710 Frankenthal(DE)**
Erfinder: **Lutter, Heinz-Dieter, Dr.**
**Helen-Keller-Weg 39**
**W-6903 Neckargemuend(DE)**
Erfinder: **Leppkes, Reinhard, Dr.**
**Eschkopfstrasse 2**
**W-6712 Bobenheim-Roxheim(DE)**

(54) **Hoch-molekulare Polyetherpolyole.**

(57) Hochmolekulare Polyetherole, erhältlich durch Umsetzung von 1 mol einer Ausgangsverbindung I, die n = 2 bis 8 mol aktiven Wasserstoff in Form von Hydroxylgruppen, Thiolgruppen, primären Aminogruppen und/oder sekundären Aminogruppen enthält und deren Molmasse bis zu 400 beträgt, mit

a) r = n bis 50n mol eines Epoxides oder mehrerer Epoxide der allgemeinen Formel II

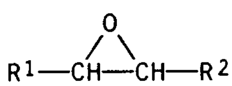

II

in der $R^1$ Wasserstoff oder eine $C_1$-$C_4$-Alkylgruppe und $R^2$ einen der Reste $R^1$ oder die Phenylgruppe, die noch ein oder zwei Halogenatome und/oder $C_1$-$C_4$-Alkylgruppen tragen kann, bedeutet, oder in der $R^1$ und $R^2$ gemeinsam eine Tetramethylengruppierung bedeuten, in Gegenwart einer Base,

b) Überführung von s = 2 bis n mol der im Umsetzungsprodukt vorliegenden Hydroxylgruppen in Alkalimetallalkoholatgruppen und

c) weitere Umsetzung des nach Stufe (b) erhaltenen Produktes oder eines Gemisches mehrerer dieser Produkte mit p mol einer q-wertigen Verbindung III, wobei p mindestens 1/3 mol ist und die Beziehung p*q = s gilt und wobei die Wertigkeit durch reaktionsfähige Chloratome, Bromatome und/oder Epoxygruppen bestimmt ist,

d) Neutralisation des Reaktionsgemisches und Reinigung der Produkte in an sich bekannter Verfahrensweise, mit der Maßgabe, daß n einen Wert von 3 bis 6 bedeutet, wenn die Verbindungen III mindestens eine Epoxygruppe und mindestens ein Chlor- oder Bromatom tragen.

Die hochmolekularen Polyetherole eignen sich als Reaktionskomponenten für die Herstellung von Polyurethanen.

EP 0 491 232 A1

Die vorliegende Erfindung betrifft hochmolekulare Polyetherole, die erhältlich sind durch Umsetzung von 1 mol einer Ausgangsverbindung I, die n = 2 bis 8 mol aktiven Wasserstoff in Form von Hydroxylgruppen, Thiolgruppen, primären Aminogruppen und/oder sekundären Aminogruppen enthält und deren Molmasse bis zu 400 beträgt, mit

a) r = n bis 50n mol eines Epoxides oder mehrerer Epoxide der allgemeinen Formel II

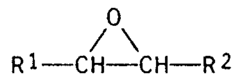

II

in der $R^1$ Wasserstoff oder eine $C_1$-$C_4$-Alkylgruppe und $R^2$ einen der Reste $R^1$ oder die Phenylgruppe, die noch ein oder zwei Halogenatome und/oder $C_1$-$C_4$-Alkylgruppen tragen kann, bedeutet, oder in der $R^1$ und $R^2$ gemeinsam eine Tetramethylengruppierung bedeuten, in Gegenwart einer Base,

b) Überführung von s = 2 bis n mol der im Umsetzungsprodukt vorliegenden Hydroxylgruppen in Alkalimetallalkoholatgruppen und

c) weitere Umsetzung des nach Stufe (b) erhaltenen Produktes oder eines Gemisches mehrerer dieser Produkte mit p mol einer q-wertigen Verbindung III, wobei p mindestens 1/3 mol ist und die Beziehung $p \cdot q = s$ gilt und wobei die Wertigkeit durch reaktionsfähige Chloratome, Bromatome und/oder Epoxygruppen bestimmt ist,

d) Neutralisation des Reaktionsgemisches und Reinigung der Produkte in an sich bekannter Verfahrensweise,

mit der Maßgabe, daß n einen Wert von 3 bis 6 bedeutet, wenn die Verbindungen III mindestens eine Epoxygruppe und mindestens ein Chlor- oder Bromatom tragen.

Außerdem betrifft die Erfindung Polyurethane, die aus mehrwertigen Isocyanaten und den hochmolekularen Polyetherolen erhältlich sind.

Die Herstellung von Polyetherpolyolen durch Umsetzung einer Ausgangsverbindung I, die mindestens zwei Hydroxylgruppen, Thiolgruppen und/oder sekundäre Aminogruppen und/oder mindestens eine primäre Aminogruppe enthält, mit einem Epoxid II gemäß dem Verfahrensschritt (a), ist aus zahlreichen Veröffentlichungen bekannt. Bei diesen bekannten Verfahren werden jedoch mit zunehmendem Molekulargewicht der Produkte immer mehr Nebenprodukte gebildet, beispielsweise durch Eliminierungsreaktionen. Sehr nachteilig auf die Eigenschaften der Produkte wirkt sich insbesondere die Umlagerung von Propylenoxid zu Allylalkohol, der dann als Kettenabbrecher wirkt, aus:

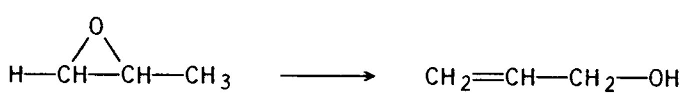

übliche Polyetherole, wie sie zur Synthese von Polyurethanen Verwendung finden, haben in der Regel Molekulargewichte bis zu 6000 g/mol. Spezielle Polyetherole mit höherem Molekulargewicht können oftmals nur unter Einsatz teurer Katalysatoren, beispielsweise Metallporphyrinkomplexen oder Doppelmetallcyaniden (vgl. EP-A 090 444; EP-A 090 445; EP-A 283 148; Macromolecules 20, 237 (1987); J. Macromol. Sci.-Chem. A 25 (5-7), 571 (1988); 33rd Annual Polyurethane Technical/Marketing Conference, Sept. 30 - Oct. 3, 1990, Seiten 368 - 373 und 375 - 379) erhalten werden.

Eine weitere, jedoch weniger gebräuchliche Methode zur Herstellung von hochmolekularen Polyetherpolyolen besteht darin, zwei Polyether über eine difunktionelle Verbindung zu koppeln.

So sind hochmolekulare Polyetherpolyole, hergestellt durch Umsetzung von Polyoxyalkylenglykolen mit Diglycidylethern, beispielsweise aus folgenden Druckschriften bekannt: US-A 2 996 551, US-A 2 792 352, US-A 2 792 357, US-A 3 383 326, US-A 3 676 501, EP-A 055 433 und EP-A 055 434.

Insbesondere ist aus der EP-A 265 225 bekannt, eine Triol-Verbindung mit mindestens einem mol Alkylenoxid reagieren zu lassen und das Verfahrensprodukt in der Menge mit Bisphenol-A-diglycidylether umzusetzen, daß zwei mol Hydroxylgruppen auf 1 mol des Glycidylethers entfallen. Die erhaltenen Polyetherpolyole weisen Molekulargewichte zwischen 2000 und 7000 auf.

Des weiteren ist aus der US-A 4 309 532 bekannt, ein Amin mit einem Hartschaum-Polyol-Initiator, der mindestens 4 mol aktiven Wasserstoff enthält, zu mischen, diese Mischung mit mindestens einem mol Epoxid umzusetzen und mindestens 2 mol des Verfahrensproduktes mit 1 mol eines Bisphenol-A-diglycidylethers reagieren zu lassen.

Gemäß der Lehre der EP-A 130 405 kann ein Polyol mit einem durchschnittlichen Molekulargewicht von mindestens 500 mit einer Verbindung, die zwei Epoxy-Gruppen enthält, zu einer Verbindung mit einem Molekulargewicht von mindestens 5000 umgesetzt werden. Die erhaltenen Polyetherole dienen zur Herstellung von Polyurethanen.

Die DE-A 22 20 723 beschreibt die Herstellung von Polyalkylenethern mit verschiedenen Endgruppen durch Polymerisation von Alkylenoxiden in Gegenwart von basischen Katalysatoren und anschließender Modifikation des alkalihaltigen Verfahrensproduktes mit Verbindungen, die Halogenmethyl-, Halogenmethylen- oder Halogenethylgruppen tragen.

Aus der DE-A 32 33 251 sind asymmetrische Polyetherole mit einer Hydroxylzahl von 15 bis 112 bekannt, die durch Überführung einer Verbindung mit 3 bis 8 mol aktiven Wasserstoff in ein Polyoxyalkylenpolyol, Umsetzung von 1 mol dieses Zwischenproduktes mit 0,1 bis 2 mol einer difuktionellen Verbindung, die eine Epoxy- und eine Hydroxylgruppe enthält, und gewünschtenfalls anschließender Alkylierung des Verfahrensproduktes herstellbar sind. Die genannten Polyetherole eignen sich zur Herstellung von Polyurethan-Kunststoffen, insbesondere von Halbhart-, Weich- und Integralschäumen.

Die aus den bekannten hochmolekularen Polyetherolen unter anderem hergestellten Polyester und Polyurethane können in ihren physikalischen Eigenschaften nicht immer voll befriedigen, so daß der Erfindung neue hochmolekulare Polyetherole als Aufgabe zugrunde lagen.

Demgemäß wurden die neuen hochmolekularen Polyetherole gefunden.

Bei der Ausgangsverbindung I handelt es sich allgemein um eine organische Verbindung oder um ein Gemisch aus mehreren organischen Verbindungen mit jeweils funktionellen Gruppen, die mit Epoxiden unter Ether- und Polyetherbildung reagieren können. Erfindungsgemäß werden solche Ausgangsverbindungen verwendet, die ein Molekulargewicht bis etwa 400 g/mol aufweisen und die $n = 2\text{-}8$ Hydroxylgruppen, Thiolgruppen und/oder sekundäre Aminogruppen und/oder $n = 1\text{-}4$ primäre Aminogruppen, bevorzugt Hydroxyl- und/oder primäre Aminogruppen, tragen.

Beispiele für derartige Ausgangsverbindungen sind di- bis oktafunktionelle Hydroxyverbindungen wie mehrwertige Alkohole, insbesondere Diole wie Ethylenglykol, 1,2-Propylenglykol, 1,3-Propylenglykol, Diethylenglykol, Dipropylenglykol, 1,4-Butylenglykol und 1,6-Hexamethylenglykol, Triole wie Glycerin und Trimethylolpropan, Tetraole wie Pentaerythrit, Hexaole wie Sorbit und Octaole wie Saccharose sowie di- bis oktafunktionelle Amine, insbesondere difunktionelle Amine, z.B. aliphatische Monoamine wie Methylamin, Ethylamin, Isopropylamin und Butylamin oder aromatische Monoamine wie Anilin, Benzylamin, o-, m-, p-Toluidin und $\alpha$-, $\beta$-Naphthylamin, trifunktionelle Amine wie Ammoniak, tetrafunktionelle Amine, z.B. aliphatische Diamine wie Ethylendiamin, 1,3-Propylendiamin, 1,3- und 1,4-Butylendiamin, 1,2-, 1,3-, 1,4-, 1,5- und 1,6-Hexamethylendiamin oder aromatische Diamine wie o-, m-, p-Phenylendiamin, 2,4-, 2,6-Toluylendiamin, 2,2'-, 2,4'- und 4,4'-Diaminodiphenylmethan, pentafunktionelle Amine wie Diethylentriamin und hexafunktionelle Amine wie Triethylentetramin.

Ganz besonders bevorzugt werden trifunktionelle Hydroxyverbindungen wie Glycerin und Trimethylolpropan.

Als Epoxide kommen allgemein die Epoxide von $C_2$-$C_8$-Monoolefinen wie Ethylen, 1,2-Propylen, 1,2-Butylen und 2,3-Butylen, von Styrol, p-Chlorstyrol, p-Methylstyrol und von Cyclohexen in Betracht. Bevorzugt werden Ethylenoxid und 1,2-Propylenoxid.

Als Basen eignen sich beispielsweise Alkalimetallalkoxide mit 1 bis 4 Kohlenstoffatomen im Alkylteil wie Natriummethylat, Natriumethylat, Kaliumethylat, Kaliumisopropylat und Natriumbutylat, Erdalkalimetallhydroxide wie Calciumhydroxid und bevorzugt Alkalimetallhydroxide wie Lithiumhydroxid und besonders bevorzugt Natrium- oder Kaliumhydroxid.

Die Anlagerung der Epoxide II im Verfahrensschritt (a) erfolgt wie üblich, gewünschtenfalls unter Zusatz eines inerten Lösungs- oder Verdünnungsmittels wie Ethylenglykoldimethylether. Die Reaktionstemperatur liegt im allgemeinen zwischen 80 und 160 °C, insbesondere zwischen 100 und 140 °C.

Für die Umsetzung empfiehlt sich das Arbeiten unter Atmosphärendruck oder bei einem erhöhten Druck zwischen 1 und 20 bar, insbesondere zwischen 1 und 6 bar.

Normalerweise überführt man die Ausgangsverbindung mit Hilfe der Base zunächst partiell in ihr Salz, wobei man die aus der Base eventuell entstehenden leichtflüchtigen Substanzen wie Wasser oder niedrig siedende Alkohole, zweckmäßigerweise unter vermindertem Druck bei einer Temperatur zwischen etwa 80 und 120 °C, abdestilliert. Die Anlagerung von 2 Molekülen des Epoxides an eine primäre Aminogruppe bzw. von 1 Molekül des Epoxides an eine sekundäre Aminogruppe gelingt auch ohne Base rasch, so daß man als Ausgangsverbindungen auch Vorkondensate einsetzen kann, die aus einem Amin und einem Molekül Epoxid pro Stickstoff-Wasserstoff-Bindung in einem getrennten Verfahrensschritt hergestellt wurden.

Im allgemeinen ist eine Menge von 0,01 bis 0,25 mol an Base pro Moläquivalent Hydroxylgruppen der Ausgangsverbindung oder des Vorkondensates (aus Amin und Epoxid) ausreichend.

Das Epoxid wird vorteilhaft in dem Maße, wie es abreagiert, in das vorgelegte Gemisch eingebracht, wofür je nach den eingesetzten Eduktmengen etwa 1 bis 10 Stunden benötigt werden.

Es können auch Gemische mehrerer Epoxide verwendet werden oder mehrere verschiedene Epoxide nacheinander zur Abreaktion gebracht werden, wobei Blockcopolymere resultieren.

Normalerweise verwendet man die 1- bis 50-fache Menge, insbesondere die 10 bis 30-fache Menge, an Epoxid pro Hydroxylgruppe der Ausgangsverbindung bzw. pro Stickstoff-Wasserstoff-Bindung bei Aminen als Ausgangssubstanzen.

Falls erforderlich, wird das Umsetzungsprodukt des Verfahrensschrittes (a) oder ein Gemisch aus mehreren dieser Umsetzungsprodukte im folgenden Verfahrensschritt mit einer weiteren Menge an Base versetzt, so daß durchschnittlich mindestens 2 Hydroxylgruppen pro Polymermolekül als Alkoholatgruppen vorliegen. Anschließend entfernt man niedrigsiedende Bestandteile wie Wasser und kurzkettige Alkohole.

Allgemein werden 0,1 bis 1 mol an Base pro Moläquivalent an aktivem Wasserstoff in der Ausgangsverbindung I benötigt.

Für die weitere Umsetzung der Alkoholatgruppen enthaltenden Umsetzungsprodukte (aus Ausgangsverbindung I und Epoxiden II) mit q-wertigen Verbindungen III gemäß dem Verfahrensschritt (c) kommen insbesondere solche Substanzen in Betracht, die Epoxyreste und/oder Halogenatome tragen. Im Einzelnen eigenen sich als q-wertige Verbindungen III

- Verbindungen, die ausschließlich Epoxyreste tragen, insbesondere difunktionelle Verbindungen (q = 2) wie Resorcindiglycidylether, 1,4-Butandiglycidylether, 1,6-Hexandiglycidylether Neopentyldiglycidylether, Polypropylenoxiddiglycidylether, Polytetramethylenoxiddiglycidylether, Bisphenol-A-diglycidylether und Bisphenol-F-diglycidylether,
- Verbindungen, die ausschließlich Halogenatome, bevorzugt Chlor- und/oder Bromatome, tragen, insbesondere difunktionelle Verbindungen (q = 2) wie Dichlormethan, Dibrommethan, 1,1-Dichlorethan, 1,1-Dibromethan, 1,2-, 1,3-und 1,4-Bis(chlormethyl)benzol, 1,2-, 1,3-und 1,4-Bis(brommethyl)-benzol, Bis(chlormethyl)ether, 4,4'-Bis(chlormethyl)diphenylether und Bis(chlormethyl)keton, trifunktionelle Verbindungen (q = 3) wie Trichlormethan und Trichlortriazin sowie tetrafunktionelle Verbindungen (q = 4) wie Tetrachlormethan;
- Verbindungen, die Epoxyreste und Halogenatome, bevorzugt Chlor- oder Bromatome, tragen, insbesondere difunktionelle Verbindungen (q = 2) wie Epichlorhydrin.

Ganz besonders bevorzugt sind difunktionelie Verbindungen (q = 2) wie 1,4-Butandiglycidylether, Bisphenol-A-diglycidylether, Dibrommethan, Bis-(chlormethyl)benzol und Epichlorhydrin sowie Trichlortriazin unter den trifunktionellen Verbindungen (q = 3).

In der Regel beträgt die Menge an q-wertiger Verbindung III mindestens 1/3 der molaren Menge an Ausgangsverbindung I.

Der Verfahrensschritt (c) kann in einem inerten Lösungs- bzw. Verdünnungsmittel wie Ethylenglykoldimethylether durchgeführt werden.

Die Reaktionstemperatur liegt normalerweise zwischen 20 und 160 °C, insbesondere zwischen 60 und 100 °C.

Bezüglich des Druckes gelten die Angaben für den Verfahrensschritt (a).

Nach beendeter Umsetzung wird das Reaktionsgemisch in üblicher Weise, entweder mit anorganischen Säuren wie Schwefelsäure und Phosphorsäure oder mit organischen Säuren wie Zitronensäure, neutralisiert.

Die hochmolekularen Polyetherpolyole können danach in an sich bekannter Weise durch Behandlung mit Adsorptionsmitteln wie Magnesiumsilikat gereinigt werden.

Die hochmolekularen Polyetherpolyole weisen im allgemeinen eine mittlere Hydroxylzahl zwischen 20 und 50 pro Gramm Substanz, insbesondere zwischen 25 und 40, und eine durchschnittliche Funktionalität zwischen 3 und 8, vorzugsweise zwischen 3 und 5 auf.

Die erfindungsgemäßen hochmolekularen Polyetherole weisen im Vergleich zu Polyetherolen, die aus gleichen Ausgangsverbindungen I und Epoxiden II hergestellt wurden, eine erhöhte Viskosität auf.

Sie eignen sich zur Herstellung von Polyurethankunststoffen und -schäumen, insbesondere von Polyurethanweichschäumen.

Die Herstellung der Polyurethane erfolgt dabei in an sich bekannter Weise durch Umsetzung von organischen mehrwertigen Isocyanaten mit den erfindungsgemäßen hochmolekularen Polyetherolen, wobei die Reaktionstemperatur üblicherweise zwischen 50 und 300 °C liegt.

Als mehrwertige Isocyanate können alle herkömmlichen für Polyurethane eingesetzten Isocyanate verwendet werden, wie z.B. 4,4'- und 2,4'-Diphenylmethandiisocyanat, Polyphenyl-polymethylen-polyisocyanate, 2,4-Toluylendiisocyanat, 2,6-Toluylendiisocyanat, Naphthalindiisocyanat, Hexamethylendiisocyanat, Isophorondiisocyanat, 2-(3-Isocyanatopropyl)-cyclohexylisocyanat und kernhydriertes 4,4'-Diphenylmethandiisocyanat sowie Mischungen der genannten Isocyanate wie z.B. Mischungen aus 2,4'- und 4,4'-Diphenylmethan-diisocyanaten, Mischungen aus Diphenylmethan-diisocyanatisomeren und Polyphenyl-polymethylen-polyisocyanten (Roh-MDI) und Mischungen aus Toluylen-diisocyanat-Isomeren und Roh-MDI.

Herstellungsbeispiele

Die Beispiele wurden mit den folgenden Umsetzungsprodukten, hergestellt gemäß dem Verfahrensschritt (a) aus einer Ausgangsverbindung I und Epoxiden II, durchgeführt:

A) Trifunktionelles Glycerin-Propylenoxid-Ethylenoxid-Blockpolymerisat; Hydroxylzahl (nach DIN 52 240): 35 mg KOH/g, Viskosität (nach DIN 51 550): 845 mpa•s/25°C, Dichte (nach DIN 51 757): 1,02 g/cm$^3$ bei 25°C (Lupranol® 2045 der Fa. BASF AG);

B) Trifunktionelles Trimethylolpropan-Propylenoxid-Ethylenoxid-Blockpolymerisat; Hydroxylzahl: 26 mg KOH/g, Viskosität: 1300 mPa•s/25°C, Dichte: 1,02 g/cm$^3$ bei 25°C (Lupranol® 2042);

C) Trifunktionelles Glycerin-Propylenoxid-Ethylenoxid-Mischpolymerisat; Hydroxylzahl: 48 mg KOH/g, Viskosität: 570 mPa•s/25°C, Dichte: 1,02 g/cm$^3$ bei 25°C (Lupranol® 2020);

D) Difunktionelles Propylenglykol-Propylenoxid-Ethylenoxid-Blockpolymerisat; Hydroxylzahl: 29 mg KOH/g, Viskosität: 800 mPa•s/25°C, Dichte: 1,02 g/cm$^3$ bei 25°C (Lupranol® 2043);

E) Difunktionelles Propylenglykol-Propylenoxid-Polymerisat; Hydroxylzahl: 56 mg KOH/g, Viskosität: 320 mPa•s/25°C, Dichte: 1,00 g/cm$^3$ bei 25°C (Lupranol® 1000);

F) Difunktionelles Ethylendiamin-Propylenoxid-Ethylenoxid-Blockpolymerisat; Hydroxylzahl: 60 mg KOH/g, Viskosität: 600 mPa•s/25°C, Dichte: 1,02 g/cm$^3$ bei 25°C (Lupranol® 2001).

Beispiel 1

1000 g des Umsetzungsproduktes A (enthaltend 75,1 mmol Alkoholatgruppen) wurden bei 100°C mit 6,56 g (37,5 mmol) Bis(chlormethyl)benzol zur Reaktion gebracht. Nach 5 Stunden versetzte man das Gemisch mit 100 g Wasser und entfernte es anschließend wieder langsam, wodurch feinkristallines Kaliumchlorid in eine besser abtrennbare Form überführt wurde. Danach versetzte man den Rückstand mit 2 g Adsorptionsmittel (synthetisches Magnesiumsilikat) und filtrierte anschließend die festen Bestandteile mittels einer Druckfilterpresse ab. Nach Trocknen im Hochvakkuum wurde das Produkt mit 1500 ppm 2,6-Di-tert.-butyl-4-methylphenol stabilisiert. Restgehalt an Alkalimetallionen: 1,4 ppm; Hydroxylzahl: 31,1 mg KOH/g; Viskosität: 1218 mPa•s/25°C.

Beispiele 2 bis 4

x g des Umsetzungsproduktes A oder C wurden bei 60°C mit y g Dibrommethan zur Reaktion gebracht. Nach einer Reaktionsdauer von 7 Stunden arbeitete man analog Beispiel 1 auf das Produkt hin auf. Die Einzelheiten dieser Beispiele sind Tabelle 1 zu entnehmen:

Tabelle 1

| Bsp. Nr | x [g] | Alkoholatgruppen im Um-setzungsprod. | y | | Restgehalt an Alkali | OH-Zahl [mg KOH/g] | Viskosität bei 25°C |
|---|---|---|---|---|---|---|---|
| | | | [g] | [mmol] | | | |
| 2 | 1000 | 75,1 mmol¹) | 6,52 | 37,5 | 2,6 ppm | 31,4 | 1258 mPa•s |
| 3 | 1000 | 48,2 mmol¹) | 4,15 | 24,1 | 13,1 ppm | 24,2 | 1778 mPa•s |
| 4 | 2000 | 89,2 mmol²) | 7,50 | 43,1 | 1,8 ppm | 38,3 | 797 mPa•s |

1) Umsetzungsprodukt A;
2) Umsetzungsprodukt C.

Beispiel 5

1100 g des Umsetzungsproduktes A (enthaltend 133 mmol Alkoholatgruppen) wurden bei 50°C mit 11,5 g (66,5 mmol) Dibrommethan zur Reaktion gebracht. Nach einer Reaktionszeit von 5 Stunden arbeitete man analog Beispiel 1 auf das Produkt hin auf. Restgehalt an Alkalimetallionen: 5,3 ppm; Hydroxylzahl: 28,9

mg KOH/g; Viskosität: 1924 mPa•s/25 °C.

Beispiel 6

3260 g des Umsetzungsproduktes A (enthaltend 244,8 mmol Alkoholatgruppen) wurden bei 100 °C mit 14,4 g (78,1 mmol) Trichlortriazin zur Reaktion gebracht. Nach einer Reaktionsdauer 10 Stunden gab man 98 g (3 Gew.-%, bezogen auf das Umsetzungsprodukt A synthetisches Magnesiumsilikat (als Adsorptionsmittel) und 1 Gew.-% Wasser zu der Reaktionsmischung. Anschließend arbeitete man analog Beispiel 1 auf das Produkt hin auf. Restgehalt an Alkalimetallionen: 2,8 ppm; Hydroxylzahl: 32,9 mg KOH/g; Viskosität: 1541 mPa•s/25 °C.

Beispiele 7 bis 9

x g des Umsetzungsproduktes A wurden bei 80 °C mit y g Epichlorhydrin zur Reaktion gebracht. Nach einer Reaktionsdauer von 7 Stunden gab man 3 Gew.-% (bezogen auf das jeweilige Umsetzungsprodukt) synthetisches Magnesiumsilikat (als Adsorptionsmittel) und 1 Gew.-% Wasser zu der Reaktionsmischung. Anschließend wurden die festen Bestandteile abgetrennt, getrocknet und mit 1500 ppm 2,6-Di-tert.-butyl-4-methylphenol stabilisiert. Die Einzelheiten dieser Beispiele sind Tabelle 2 zu entnehmen.

Tabelle 2

| Bsp. Nr | x [g] | Alkoholatgruppen im Umsetzungsprodukt | y | | Restgehalt an Alkali | OH-Zahl [mg KOH/g] | Viskosität bei 25 °C |
|---|---|---|---|---|---|---|---|
| | | | [g] | [mmol] | | | |
| 7 | 3055 | 229 mmol | 9,8 | 106 | 0,9 ppm | 36,1 | 1161 mPa•s |
| 8 | 4823 | 362 mmol | 30,2 | 326 | 4,0 ppm | 33,0 | 1611 mPa•s |
| 9 | 4876 | 546 mmol | 45,5 | 491 | 2,6 ppm | 31,0 | 2917 mPa•s |

Beispiele 10 bis 14

x g des Umsetzungsproduktes A (enthaltend 75 mmol Alkoholatgruppen pro 1000 g Substanz) wurden bei T °C mit y g Butandiol- oder Bisphenol-A-diglycidylether zur Reaktion gebracht. Nach einer Reaktionsdauer von t Stunden gab man pro 1000 g des eingesetzten Umsetzungsproduktes 30 g synthetisches Magnesiumsilikat (als Adsorptionsmittel) und 15 g Wasser zu der Reaktionsmischung, rührte noch 1 Stunde bei 100 °C und filtrierte anschließend die festen Bestandteile mittels Druckfilterpresse ab. Das Produkt wurde im Vakuum getrocknet. Die Einzelheiten dieser Beispiele sind Tabelle 3 zu entnehmen:

Tabelle 3

| Bsp. Nr | x [g] | y | | Diglycidylether | T [°C] | t [h] | Viskosität bei 25 °C |
|---|---|---|---|---|---|---|---|
| | | [g] | [mmol] | | | | |
| 10 | 3000 | 7,47 | 37 | Butandiol- | 80 | 10 | 931 mPa•s |
| 11 | 3000 | 22,42 | 111 | Butandiol- | 100 | 9 | 1158 mPa•s |
| 12 | 3000 | 51,6 | 256 | Butandiol- | 100 | 8 | 1761 mPa•s |
| 13 | 2000 | 25,2 | 74 | Bisphenol-A- | 100 | 7 | 1549 mPa•s |
| 14 | 1000 | 29,0 | 85 | Bisphenol-A- | 100 | 8 | 4250 mPa•s |

Beispiel 15

Eine Mischung aus 5540 g des Umsetzungsproduktes F enthaltend (52,57 mmol Alkoholatgruppen pro 1000 g Substanz) und 75,5 g 45 gew.-%iger wäßriger Kaliumhydroxidlösung wurden unter reduziertem Druck (30 mbar) solange auf 100 °C erhitzt, bis das vorhandene Wasser entfernt war. Dann versetzte man

den Rückstand bei 60 °C mit 74 g (0,8 mol) Epichlorhydrin, rührte noch 7 Stunden bei dieser Temperatur und arbeitete anschließend analog Beispiel 1 auf das Produkt hin auf. Hydroxylzahl: 53 mg KOH/g; Viskosität: 1903 mPa•s/25 °C.

Beispiel 16

Eine Mischung aus 3910 g (1 mol) des Umsetzungsproduktes A (enthaltend 294 mmol Alkoholatgruppen pro 1000 g Substanz), 3482 g (1 mol) des Umsetzungsproduktes D (enthaltend 151 mmol Alkoholatgruppen pro 100 g Substanz) und 56,6 g 45 gew.-%iger wäßriger Kaliumhydroxid-Lösung wurde unter reduziertem Druck (30 mbar) solange auf 100 °C erhitzt, bis das vorhandene Wasser entfernt war. Dann versetzte man den Rückstand bei 60 °C mit 74 g (0,8 mol) Epichlorhydrin, rührte noch 8 Stunden bei dieser Temperatur und arbeitet anschließend analog Beispiel 1 auf das Produkt hin auf. Restgehalt an Alkalimetallionen: < 1 ppm; Hydroxyzahl: 27 mg KOH/g; Viskosität: 2960 mPa•s/25 °C.

Beispiel 17

Beispiel 16 wurde mit folgenden Mengenverhältnissen wiederholt:
3910 g (1 mol) des Umsetzungsproduktes A (enthaltend 294 mmol Alkoholatgruppen pro 1000 g Substanz);
1930 g (1 mol) des Umsetzungsproduktes E (enthaltend 117 mmol Alkoholgruppen pro 1000 g Substanz);
61 g 45 %ige wäßrige Kaliumhydroxid-Lösung;
74 g (0,8 mol) Epichlorhydrin;
Restgehalt an Alkalimetallionen: 2 ppm.
Hydroxylzahl: 36 mg KOH/g; Viskosität: 4540 mPa•s/25 °C.

Anwendungsbeispiele

Beispielhaft wurden unter Verwendung der Verfahrensprodukte aus den Beispielen Nr. 8 und Nr. 9 Polyurethan-Weichschäume hergestellt, die durch Reaktion zweier Komponenten K1 und K2 erhalten wurden.

Als Vergleich diente ein Polyurethan-Weichschaum, hergestellt unter Verwendung des Umsetzungsproduktes A (Glycerin-Propylenoxid-Ethylenoxid-Blockpolymerisat).

Komponente K1 enthielt im einzelnen:

| | |
|---|---|
| 95,66 Gew.-Teile | des Verfahrensproduktes aus Beispiel Nr. 8 oder Nr. 9 oder das Umsetzungsprodukt A, |
| 3,24 Gew.-Teile | Wasser, |
| 0,46 Gew.-Teile | einer 33 gew.-%igen Lösung von Triethylendiamin in Dipropylenglykol (Lupragen® N 201 der BASF AG), |
| 0,12 Gew.-Teile | einer 70 gew.-%igen Lösung eines tertiären aliphatischen Amines in Dipropylenglykol (Lupragen® N 206 der BASF AG), |
| 0,46 Gew.-Teile | eines aliphatischen tertiären Aminoalkohols (Lupragen® N 107) |
| 0,06 Gew.-Teile | eines handelsüblichen Stabilisators/Zellregulators für hochelastische Polyurethanformschäume (TEGOSTAB® B 4690 der Fa. Th. Goldschmidt AG). |

Komponente K2 bestand aus
Roh-MDI, das 37 Gew.-% 4,4'-Diphenylmethandiisocyanat und 2 Gew.-% 2,4'-Diphenylmethandiisocyanat enthielt; Gesamt-Gehalt an Isocyanatgruppen: 31,3 Gew.-%; Funktionalität: ca. 2,7).

100 Gew.-Teile der Komponente K1 und 55 Gew.-Teile der Komponente K2 (NCO-Index = 100, entsprechend einer stöchiometrischen Umsetzung der Isocyanat- mit den Hydroxylgruppen) wurden 8 Sekunden bei 23 °C intensiv gemischt. Anschließend gab man 864 g der Mischung in eine auf 50 °C erwärmte Metallform (innere Abmessungen 40 x 40 x 10 cm). Nach dem Aufschäumen und einer Entformzeit von 3 min entstand ein elastischer Formkörper mit einer Dichte nach DIN 53 420 von 45 g/l.

Tabelle 4 zeigt die jeweiligen physikalischen Parameter der erhaltenen Polyurethane.

Tabelle 4

| physikal. Eigenschaften | Polyurethan-Weichschäume; das Verfahrensprodukt aus Bsp. 8 | Bsp. 9 | Komponente K1 enthielt das Umsetzungsprodukt A (Vergleich) |
|---|---|---|---|
| Zugfestigkeit [kPa] (DIN 53 571) | 103 | 102 | 87 |
| Dehnung [%] (DIN 53 571) | 63 | 57 | 64 |
| Weiterreißfestigkeit [N/mm] (DIN 53 575) | 0,29 | 0,30 | 0,25 |
| Druckverformungsrest [%] (DIN 53 572) | 5,6 | 5,5 | 4,6 |
| Stauchhärte [kPa] (DIN 53 577) | | | |
| - für 20 % Stauchung | 3,1 | 4,1 | 5,5 |
| - für 40 % Stauchung | 4,2 | 5,7 | 7,6 |
| - für 60 % Stauchung | 6,8 | 9,8 | 12,8 |

Aus Tabelle 4 ist zu erkennen, daß sich mit den erfindungsgemäß hergestellten hochmolekularen Polyetherole (Bsp. 8 und 9) viel weichere Polyurethanschäume erhalten lassen als mit den auf herkömmliche Weise hergestellten Polyetherpolyolen (Umsetzungsprodukt A). Außerdem ist die Zug- und Weiterreißfestigkeit erhöht.

**Patentansprüche**

1. Hochmolekulare Polyetherole, erhältlich durch Umsetzung von 1 mol einer Ausgangsverbindung I, die n = 2 bis 8 mol aktiven Wasserstoff in Form von Hydroxylgruppen, Thiolgruppen, primären Aminogruppen und/oder sekundären Aminogruppen enthält und deren Molmasse bis zu 400 beträgt, mit

   a) r = n bis 50n mol eines Epoxids oder mehrerer Epoxide der allgemeinen Formel II

   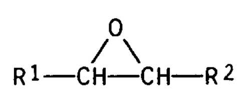 II

   in der $R^1$ Wasserstoff oder eine $C_1$-$C_4$-Alkylgruppe und $R^2$ einen der Reste $R^1$ oder die Phenylgruppe, die noch ein oder zwei Halogenatome und/oder $C_1$-$C_4$-Alkylgruppen tragen kann, bedeutet, oder in der $R^1$ und $R^2$ gemeinsam eine Tetramethylengruppierung bedeuten, in Gegenwart einer Base,

   b) Überführung von s = 2 bis n mol der im Umsetzungsprodukt vorliegenden Hydroxylgruppen in Alkalimetallalkoholatgruppen und

   c) weitere Umsetzung des nach Stufe (b) erhaltenen Produktes oder eines Gemisches mehrerer dieser Produkte mit p mol einer q-wertigen Verbindung III, wobei p mindestens 1/3 mol ist und die Beziehung $p \cdot q = s$ gilt und wobei die Wertigkeit durch reaktionsfähige Chloratome, Bromatome und/oder Epoxygruppen bestimmt ist,

   d) Neutralisation des Reaktionsgemisches und Reinigung der Produkte in an sich bekannter Verfahrensweise,

   mit der Maßgabe, daß n einen Wert von 3 bis 6 bedeutet, wenn die Verbindungen III mindestens eine Epoxygruppe und mindestens ein Chlor- oder Bromatom tragen.

2. Hochmolekulare Polyetherole nach Anspruch 1, erhältlich aus Glycerin als Ausgangsverbindung I.

**3.** Hochmolekulare Polyetherole nach Anspruch 1, erhältlich aus Ethylenoxid und/oder Propylenoxid als Epoxid II.

**4.** Verfahren zur Herstellung von hochmolekularen Polyetherolen, dadurch gekennzeichnet, daß man 1 mol einer Ausgangsverbindung I, die n = 2 bis 8 mol aktiven Wasserstoff in Form von Hydroxylgruppen, Thiolgruppen, primären Aminogruppen und/oder sekundären Aminogruppen enthält und deren Molmasse bis zu 400 beträgt, mit

a) r = n bis 50n mol eines Epoxids oder mehrerer Epoxide der allgemeinen Formel II

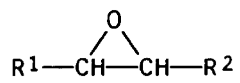 II

in der $R^1$ Wasserstoff oder eine $C_1$-$C_4$-Alkylgruppe und $R^2$ einen der Reste $R^1$ oder die Phenylgruppe, die noch ein oder zwei Halogenatome und/oder $C_1$-$C_4$-Alkylgruppen tragen kann, bedeutet, oder in der $R^1$ und $R^2$ gemeinsam eine Tetramethylengruppierung bedeuten, in Gegenwart einer Base umsetzt,

b) s = 2 bis n mol der im Umsetzungsprodukt vorliegenden Hydroxylgruppen in Alkalimetallalkoholatgruppen überführt und

c) das nach Stufe (b) erhaltene Produkt oder ein Gemisch aus mehreren dieser Produkte mit p mol einer q-wertigen Verbindung III, wobei p mindestens 1/3 mol ist und die Beziehung $p \cdot q = s$ gilt und wobei die Wertigkeit durch reaktionsfähige Chloratome, Bromatome und/oder Epoxygruppen bestimmt ist, weiter umsetzt,

d) das Reaktionsgemisch neutralisiert und die Produkte in an sich bekannter Verfahrensweise reinigt,

mit der Maßgabe, daß n einen Wert von 3 bis 6 bedeutet, wenn die Verbindungen III mindestens eine Epoxygruppe und mindestens ein Chlor- oder Bromatom tragen.

**5.** Polyurethane, erhältlich aus mehrwertigen Isocyanaten und den hochmolekularen Polyetherolen I gemäß Anspruch 1.

**6.** Verfahren zur Herstellung von Polyurethan, dadurch gekennzeichnet, daß man mehrwertige Isocyanate mit den hochmolekularen Polyetherolen gemäß Anspruch 1 umsetzt.

Europäisches Patentamt

# EUROPÄISCHER RECHERCHENBERICHT

Nummer der Anmeldung

EP 91 12 0796

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X,D | FR-A-2 182 070 (BASF)<br>* Beispiele 2-5; Tabelle 1 *<br>* Seite 5, Zeile 34 - Zeile 36 *<br>* Seite 3, Zeile 24 - Zeile 26 * | 1,3-6 | C08G65/26<br>C08G18/48 |
| Y | | 2 | |
| Y | DE-A-2 656 727 (BASF)<br>* Anspruch 8; Beispiele 2-4 * | 2 | |
| X | FR-A-1 414 997 (HOECHST)<br>* Anspruch 1; Beispiel 1 * | 1-4 | |
| A,D | US-A-4 309 532 (CUSCURIDA M. ET AL)<br>* Ansprüche 1-5; Beispiele 2-5 *<br>* Spalte 4, Zeile 43 * | 1-6 | |
| A | US-A-4 587 365 (ANCHOR M.J.)<br>* Ansprüche 1,4 *<br>* Spalte 3, Zeile 48 - Zeile 52 * | 1-4 | |
| A | CHEMICAL ABSTRACTS, vol. 83, no. 8, 25. August 1975, Columbus, Ohio, US;<br>abstract no. 60296Z,<br>SNIEZEK T. ET AL: 'Branched - chain polyethers containing a halogen'<br>Seite 76 ;<br>& PL- A - 68773(INSTYTUT CIEZKIEJ ORGANICZNEJ ) 10-11-1973<br>* Zusammenfassung * | 1-6 | RECHERCHIERTE SACHGEBIETE (Int. Cl.5 )<br>C08G |

Der vorliegende Recherchenbericht wurde für alle Patentansprüche erstellt

| Recherchenort | Abschlußdatum der Recherche | Prüfer |
|---|---|---|
| DEN HAAG | 20 MAERZ 1992 | O'SULLIVAN T.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)